# EUROPEAN PATENT SPECIFICATION

(11) **EP 1 589 237 B1**
(45) Date of publication and mention of the grant of the patent: **13.06.2007**
(21) Application number: 05008027.4
(22) Date of filing: 13.04.2005
(51) Int. Cl.: F16B 37/12

(54) **Chromate free fluoropolymer coated fastener inserts**
Mit chromatfreiem Fluorpolymer beschichtete Befestigungseinsätze
Inserts de fixation revêtus d'une couche de fluoropolymère sans chromate

(30) Priority: 21.04.2004 US 829101
(43) Date of publication of application: 26.10.2005
(73) Proprietor: Newfrey LLC, Newark, Delaware 19711 (US)
(72) Inventor: Lutkus, William J., Watertown, Connecticut 06795 (US); Giannakakos, William, Danbury, Connecticut 06811 (US)
(74) Representative: Haar, Lucas Heinz Jörn

(56) References cited:
- US-A1- 2003 190 213
- US-B1- 6 224 311

## Description

### FIELD OF THE INVENTION

The present invention relates to coated fastener inserts and, more particularly, to chromate free fluoropolymer coated fastener inserts to prevent the galvanic corrosion and reduce incidental movement of the inserts within the fastener assemblies.

### BACKGROUND OF THE INVENTION

Fastener assemblies come in a variety of shapes, sizes, designs and materials. Many fastener assemblies include not only a fastener such as a bolt, pin or screw, but also will include a fastener insert to be positioned within a tapped hole or nut. The type of fastener insert needed for a particular fastening operation will in large part dictate the type of fastener to be employed. While the present invention is applicable to various fastener assemblies wherein galvanic corrosion is a potential problem, the invention will hereinafter be described with reference to fastener assemblies with metallic helically coiled wire fastener inserts. By way of non-limiting example, certain metallic helically coiled wire inserts useful in association with a threaded fastener is described in U.S. Patent No. 2,672,070 entitled Wire Coil Screw Thread Insert for Molded Material. Other fastener inserts which can be coated in accordance with the teachings of the present invention are described in U.S. Patent Nos. 2,512,316; 2,586,007; 2,708,265; 2,755,699; 2,874,741; 2,934,123; 3,018,684, each of which is expressly incorporated by reference.

Generally speaking, fastener assemblies are strengthened due to the inherent flexibility of helically coiled wire inserts since the insert provides a more balanced distribution of dynamic and static loads throughout the length of thread engagement. Helically coiled wire inserts allow for the use of smaller bosses, flanges and fasteners than other inserts, thus presenting a cost savings, particularly for high volume applications.

While such helically coiled wire inserts are generally useful as anchoring mechanisms for threaded fasteners, in order to be used in high strength applications such inserts must be formed from high strength metals such as 302/304 stainless steel. The use of stainless steel inserts in fastener assemblies wherein the nut and/or fasteners are formed from other alloys leads to certain perceived problems such as the possibility of galvanic corrosion occurring over time. By the phrase "galvanic corrosion", it is meant the electrochemical corrosion resulting from the current caused in a galvanic cell between two dissimilar metals in an electrolyte because of the difference in potential (emf) of the two metals.

Stainless steel fastener inserts have been coated with zinc chromate in an effort to prevent galvanic corrosion. However, application of the zinc chromate requires strict quantitative controls and is considered labor intensive. The application of too much zinc chromate can restrict movement. Additionally, the installation tools would require frequent cleaning to prevent build up of the zinc chromate on mandrels of the tool which is undesirable. The application of too little zinc chromate leads to certain other problems such as inadequate corrosion protection, for example.

Recently, in an attempt to address many of the above described problems and disadvantages, fastener inserts have been coated with certain resin bonded fluoropolymer compositions. Examples of such resin bonded are described in U.S. Patent No. 6,224,311 B1 which is hereby incorporated by reference. While generally useful, fastener inserts coated with the fluoropolymer compositions described in this document present additional challenges. For example, tangless helically coiled fastener inserts coated with fluoropolymer compositions including chromates have been found to move incidentally within a tapped hole during prevailing torque testing. Further, the texture of the chromate inclusive fluoropolymer composition has been found to interfere with the proper function of such tangles inserts. That is, fastener inserts coated with chromate inclusive fluoropolymers periodically bridged across adjacent coils interfering with the installation of fasteners.

In view of the foregoing, the present invention relates to a method for preventing galvanic corrosion in fastener assemblies employing a metallic fastener insert and a fastener for use in a receiving element, said method comprising the steps of:
a) providing a fastener and a fastener insert for retaining the fastener within said receiving element;
b) coating said fastener insert with a chromate free fluoropolymer composition; and
c) adjoining the fastener and coated fastener insert within said receiving element.

Optionally, the fastener insert is degreased prior to application of the chromate free fluoropolymer composition. Additionally, the fastener insert surface to be coated may be abraded using a conventional technique such as grit blasting to enhance the coating's adhesion, wear resistance and overall durability. If the coated fastener insert is likely to be used in the presence of chemicals or corrosive agents, a primer composition may be employed after degreasing but prior to coating, as will be described in greater detail below.

The present invention also relates to a coated metallic fastener insert for securing a fastener within a receiving element, said insert comprising:
a substantially cylindrical body of helically wound wire including a plurality of convolutions wherein substantially the entire exterior surface is coated with a resin bonded chromate free fluoropolymer.

The present invention further relates to a method of producing a fastener insert which is resistant to galvanic corrosion, said method comprising the steps of:
a) providing a metallic fastener insert; and
b) coating the metallic fastener with a chromate free fluoropolymer composition to substantially encase the metallic fastener.

As a result of coating the fastener insert with a chromate free fluoropolymer composition, it is a primary object of the present invention to extend the useful life of fastener assemblies by preventing galvanic corrosion.

Another object of the present invention is to provide fastener inserts with more consistent prevailing torque values.

Yet another object of the present invention is to provide fastener inserts that remain substantially fixed within a tapped hole upon insertion.

Still other objects of advantages of the present invention will become apparent to those skilled in the art, upon further review of the detailed descriptions provided below and the appended claims.

### BRIEF DESCRIPTION OF THE DRAWINGS

The present invention will become more fully understood from the detailed description and the accompanying drawings, wherein:

Fig. 1 is a blown apart perspective view of a fastener assembly including a helically wound insert;

Fig. 2 is an assembly view in cross-section of the fastener assembly of Fig. 1;

Fig. 3 is a perspective view illustrating the spray coating of a helically wound insert;

Fig. 4 is a perspective view illustrating the dip coating of a helically wound insert;

Fig. 5 is a cross-sectional view of a convolution taken along line 5-5 of Fig. 1 of a coated fastener insert; and

Fig. 6 is an assembled view in cross section of an alternative fastener assembly.

### DETAILED DESCRIPTION OF THE PREFERRED EMBODIMENTS

The following description of the preferred embodiment(s) is merely exemplary in nature and is in no way intended to limit the invention, its application, or uses.

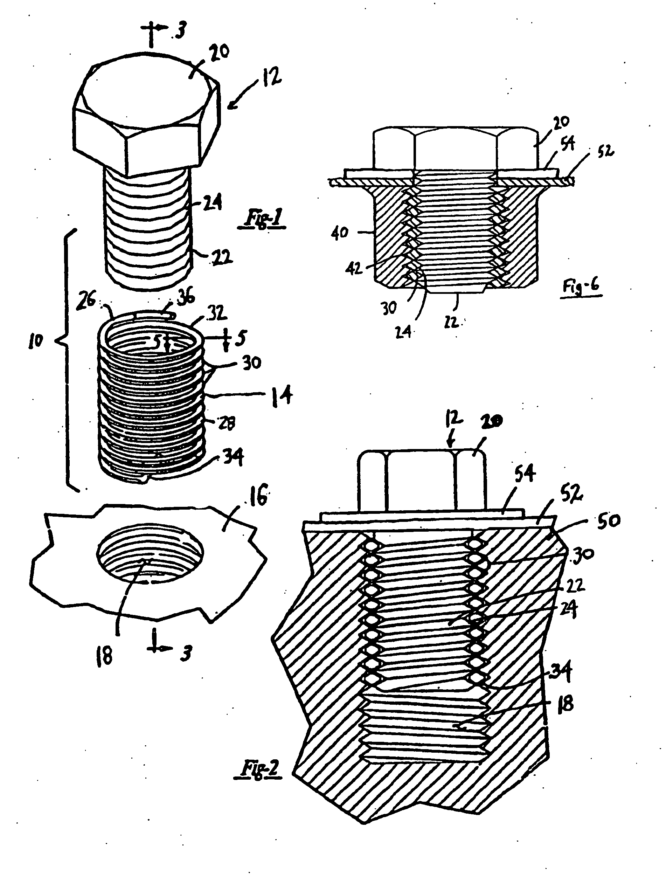

Referring to Fig. 1, there is shown a fastener assembly 10 including a threaded fastener 12 and a fastener insert 14 insertable within a tapped hole 18 of a substrate 50. The fastener assembly 10 serves to attach a component 52 to the substrate 50 as shown in Figure 2. Optionally, a washer 54 may be used between the head of the fastener and the substrate to assist in securing the component 52.

The fastener 12 generally includes a head 20 and a shank 22 having radially outwardly projecting threads 24. The fastener insert 14 may be of any form capable of retaining the fastener within the receiving element 16 such as a tapped hole 18 of a substrate 50, but preferably is in the form of a helically wound wire 26 including a body 28 having a plurality of convolutions 30 disposed between first and second ends, 32 and 34, respectively. At least one of the ends may be provided with a selectively removable driving tang 36 for assistance in the installation of the insert within a tapped hole. While the receiving element of the currently described embodiment is in the form of a tapped hole, it should be noted that an alternative embodiment is depicted in the fastener assembly of Figure 6, wherein coated fastener inserts are used with locking nuts instead of within tapped holes.

Preferably, the fastener inserts 14 are larger in diameter, before installation than the tapped hole 18 (or nut barrel), such that upon installation they become firmly secured, as shown most clearly in Fig. 2. Further, when the helically wound inserts are disposed within the threaded barrels, the coils provide permanent convolution 60° internal screw threads which accommodate virtually any standard threaded bolt or screw.

Prior to inserting the fastener insert 14 within the tapped hole 18 or nut barrel 42, if the receiving element 16 is in the form of a locking nut 40, the insert is coated with a chromate free resin bonded fluoropolymer composition such as XYLAN® 5230, available from Whitford Corporation of Westchester, Pennsylvania, by way of non-limiting example. By the term "chromate free" it is intended that the fluoropolymer resin composition will have less than about 1.0 weight % of chromate components such as zinc chromate, by way of non-limiting example.

While theoretical, it is believed that chromate free fluoropolymer phosphates such as zinc phosphate can be used in preferred fluoropolymer resin compositions in place of currently employed chromates such as zinc chromate. In addition to various functional improvements such as reducing movement of the fastener insert within a fastener assembly, the chromate free fluoropolymer coated inserts no longer present problems associated with chromate disposal and degradation.

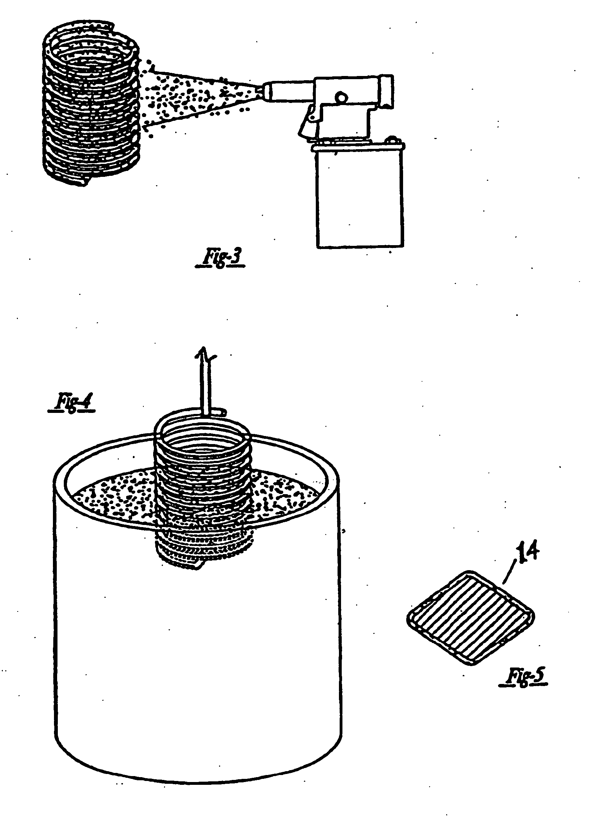

As illustrated with reference to Figs. 3 and 4, the fluoropolymer composition may be applied via dip spin or air spray techniques. Before applying the fluoropolymer coating, it is preferred that the composition be thoroughly agitated such that the chromate free fluoropolymer is adequately dispersed in solution. In addition to the prevention of galvanic corrosion to which this invention is particularly directed, when the fastener insert is formed from a stainless steel, the chromate free fluoropolymer composition may also serve to reduce galling. A cross section of a wire convolution chromate free fluoropolymer coated-fastener insert is shown in the cross section in Figure 5.

Interestingly, the chromate free fluoropolymer coated-fastener inserts of the present invention appear to have a smoother finish than those coated with the chromate inclusive compositions. Despite the smoother finish, the chromate free fluoropolymer coated fastener inserts perform better than fastener inserts coated with chromate inclusive fluoropolymer compositions during prevailing torque test conducted using tangles inserts. This is unexpected in that a smoother finish would normally dictate a propensity for movement of a fastener insert within a tapped hole wherein all operating parameters are the same, which was not the case.

It is preferred that the dry fluoropolymer film thickness be in the 2,54 µm to about 17,8 µm, and preferably in the range of between 7,6 µm to about 12,7 µm. As such, it is preferred that under dip spin applications that at least two coats are applied to obtain the preferred thickness. Using conventional spray application techniques, a single coat is possible.

Under certain circumstances it may be necessary to modify the viscosity of the chromate free fluoropolymer composition by admixing with a solvent such as methylethylketone (mek) until the desired viscosity is obtained. A preferred viscosity is generally in the range of between about 30 mPa·s to 70 mPa·s at 25°C.

As noted above, it is preferred that the fastener inserts be free of contaminants such as oil, grease, metal shavings, etc., since contaminants may cause poor adhesion of the coating to the fastener insert or defects in the dry coating composition. Thus, it is recommended that the fastener inserts be cleaned, i.e., degreased prior to coating using a chlorinated or fluorinated solvent, detergents, or a high temperature burnout process wherein the part is exposed to temperatures roughly between 400 to 425°C for ten to twenty minutes to ensure that any petroleum based contaminants are fully carbonized.

In addition to cleaning the surface, it is also recommended that the fastener inserts be abraded utilizing conventional techniques such as grit and/or sand blasting. Recommended grit sizes are between about 0,18 to 0,127 mm at an air pressure of about 5,52 bar. Once the abrading step has been carried out, each fastener insert should be solvent rinsed to flush out any grit residue.

Optionally, particularly for applications wherein the fastener assembly is susceptible to harsh environmental conditions, the fastener inserts may be pre-treated with a primer.

To carry out a dip spin application, each fastener insert is dipped for between about five to ten seconds and subsequently spun for five to fifteen seconds in each direction changing direction at least three times. Thereafter, the fastener insert is cured for between about 7 to 10 minutes at temperatures of between about 190°C to about 240°C. The part is preferably allowed to cool to ambient temperatures of less than about 38°C prior to carrying out the aforementioned dip spinning steps to apply the second coat.

Air spray techniques generally involve application at line pressures of between 2,75 bar to 3,45 bar and pot pressures in the range of between 0,2 bar to 0,48 bar at ambient temperatures of less than about 38°C. Following the application of the chromate free fluoropolymer composition, the fastener inserts are cured for between about 7 to 10 minutes at temperatures of between about 180°C to about 240°C.

Upon fully curing the coating upon the fastener inserts quality control in the form of a visual inspection should be carried out. If excessive bridging of the coating between adjacent coils is present, such coils should be rejected.

While it will be apparent that the preferred embodiments of the invention disclosed are well calculated to fulfill the objects stated, it will be appreciated that the invention is susceptible to modification, variation and change within the scope of the claims.

## Claims

1. A method for preventing galvanic corrosion in fastener assemblies (10) employing a metallic fastener insert (14), a threaded fastener (12) and a receiving element (16), said method comprising the steps of:
a) providing a fastener (12) and a fastener insert (14) for retaining the fastener (12) within said receiving element;
b) coating said fastener insert (14) with a chromate free fluoropolymer composition; and
c) adjoining the fastener (12) and coated fastener insert (14) within said receiving element (16).

2. The method of Claim 1, wherein said fastener insert (14) is cleaned prior to being coated.

3. The method of one of Claims 1 and 2, wherein said fastener insert (14) is abraded prior to being coated.

4. The method of one of Claims 1 to 3, wherein said fastener insert (14) is precoated with a primer prior to applying said coating.

5. The method of one of Claims 1 to 4, wherein said coating applied to said fastener insert (14) has an average dry thickness of between about 7,6 µm to 12,7 µm.

6. The method of one of Claims 1 to 5, wherein said coating is applied via a dip spin technique.

7. The method of one of Claims 1 to 6, wherein said coating is applied in multiple layers.

8. The method of one of Claims 1 to 7, wherein said coating is applied via spraying.

9. The method of one of Claims 1 to 8, wherein said coating has an average viscosity at the time of application of between about 30 to 70 mPas at 25°C.

10. The method of one of Claims 1 to 9, wherein said coating is cured upon said fastener insert (14) by baking at a temperature of between about 180°C to about 240°C prior to being inserted into said receiving element (16).

11. A fastener assembly (10) comprising:
a threaded fastener (12) formed from a first metal;
a metallic fastener insert (14); and
a receiving element (16);
wherein at least one of the metallic fastener inserts (14) and the receiving element (16) is formed from a second metal;
**characterized in that** said fastener insert (14) is coated with a chromate free fluoropolymer composition to reduce the potential occurrence of galvanic corrosion in the fastener assembly (10).

12. The fastener assembly of Claim 11, wherein said coating has an average dry thickness of between about 7,6 µm to 12,7 µm.

13. The fastener assembly insert of one of Claims 11 and 12, wherein said coating has an average viscosity at the time of application of between about 30 mPa·s to 70 mPa·s at 25°C.

14. A coated metallic fastener insert (14) of a fastener assembly (10) including a metallic fastener (12) and a receiving element (16) for said fastener insert (14), at least one of said insert (14), fastener (12) and receiving element (16) being formed from a metal alloy which is different from the metal of the other of said insert (14), fastener (12) or receiving element (16), said insert 14 comprising:
a substantially cylindrical body (28) of helically wound wire (26) including a plurality of convolutions (30) **characterized in that,** the outer surface of the body (28) is coated with a chromate free fluoropolymer composition to preclude galvanic corrosion within said fastener assembly (10).

15. The coated metallic fastener insert of claim 14, wherein said insert (14) is formed from stainless steel.

16. The coated metallic fastener insert of one of claims 14 and 15, further comprising a primer applied to said insert prior to the application of said fluoropolymer composition.

17. The coated metallic fastener insert of one of claims 14 to 16, wherein the coils of said insert (14) provide 60° internal screw threads upon insertion within said tapped hole (18).

## Patentansprüche

1. Verfahren zur Vermeidung galvanischer Korrosion bei Befestigungsvorrichtungen (10) mit einem Befestigungseinsatz (14) aus Metall, einem Schraubenverbinder (12) und einem Aufnahmeelement (16), wobei das Verfahren folgende Schritte umfasst:
a) Bereitstellen eines Befestigungselementes (12) und eines Befestigungseinsatzes (14), um das Befestigungselement (12) in dem Aufnahmeelement zu haltern;
b) Beschichten des Befestigungseinsatzes (14) mit einer chromatfreien Fluorpolymer-Zusammensetzung; und
c) Einfügen von Befestigungselement (12) und beschichtetem Befestigungseinsatz (14) in das Aufnahmeelement (16).

2. Verfahren nach Anspruch 1, wobei der Befestigungseinsatz (14) vor der Beschichtung gereinigt wird.

3. Verfahren nach einem der Ansprüche 1 und 2, wobei der Befestigungseinsatz (14) vor der Beschichtung angeschliffen wird.

4. Verfahren nach einem der Ansprüche 1 bis 3, wobei der Befestigungseinsatz (14) vor dem Auftragen der Beschichtung mit einem Primer vorbeschichtet wird.

5. Verfahren nach einem der Ansprüche 1 bis 4, wobei die auf den Befestigungseinsatz (14) aufgetragene Schicht eine durchschnittliche Trockendicke von etwa 7,6 µm bis 12,7 µm aufweist.

6. Verfahren nach einem der Ansprüche 1 bis 5, wobei die Beschichtung mittels eines Tauchschleuderverfahrens aufgetragen wird.

7. Verfahren nach einem der Ansprüche 1 bis 6, wobei die Beschichtung in mehreren Schichten aufgetragen wird.

8. Verfahren nach einem der Ansprüche 1 bis 7, wobei die Beschichtung mittels einer Spritztechnik aufgetragen wird.

9. Verfahren nach einem der Ansprüche 1 bis 8, wobei die Beschichtung zum Zeitpunkt ihres Auftrags eine durchschnittliche Viskosität von etwa 30 bis 70 mPa bei 25°C aufweist.

10. Verfahren nach einem der Ansprüche 1 bis 9, wobei die Beschichtung auf dem Befestigungseinsatz (14) vor dessen Einsetzen in das Aufnahmeelement (16) durch Einbrennen bei einer Temperatur von etwa 180°C bis etwa 240°C endgehärtet wird.

11. Befestigungsvorrichtung (10), umfassend:
einen aus einem ersten Metall gebildeten Schraubenverbinder (12);
einen Befestigungseinsatz (14) aus Metall; und
ein Aufnahmeelement (16),
wobei wenigstens einer von den Befestigungseinsätzen (14) aus Metall und dem Aufnahmeelement (16) aus einem zweiten Metall gebildet ist;
**dadurch gekennzeichnet, dass** der Befestigungseinsatz (14) mit einer chromatfreien Fluorpolymer-Zusammensetzung beschichtet ist, um das Risiko einer galvanischen Korrosion in der Befestigungsvorrichtung (10) zu mindern.

12. Befestigungsvorrichtung nach Anspruch 11, wobei die Beschichtung eine durchschnittliche Trockendicke von etwa 7,6 µm bis 12,7 µm aufweist.

13. Befestigungseinsatz der Befestigungsvorrichtung nach einem der Ansprüche 11 und 12, wobei die Beschichtung zum Zeitpunkt ihres Auftrags eine durchschnittliche Viskosität von etwa 30 mPa bis 70 mPa bei 25°C aufweist.

14. Beschichteter Befestigungseinsatz (14) aus Metall einer Befestigungsvorrichtung (10) mit einem Befestigungselement (12) aus Metall und einem Aufnahmeelement (16) für den Befestigungseinsatz (14), wobei wenigstens eines der Teile Einsatz (14), Befestigungselement (12) und Aufnahmeelement (16) aus einer Metalllegierung gebildet ist, die sich von dem Metall des jeweils anderen Teils Einsatz (14), Befestigungselement (12) oder Aufnahmeelement (16) unterscheidet, wobei der Einsatz (14) umfasst:
einen im wesentlichen zylindrischen Körper (28) aus helixförmig gewickeltem Draht (26) mit einer Vielzahl von Windungen (30), **dadurch gekennzeichnet, dass** die Außenfläche des Körpers (28) mit einer chromatfreien Fluorpolymer-Zusammensetzung beschichtet ist, um galvanische Korrosion in der Befestigungsvorrichtung (10) auszuschließen.

15. Beschichteter Befestigungseinsatz aus Metall nach Anspruch 14, wobei der Einsatz (14) aus rostfreiem Stahl gebildet ist.

16. Beschichteter Befestigungseinsatz aus Metall nach einem der Ansprüche 14 und 15, der außerdem einen Primer aufweist, der vor dem Auftrag der Fluorpolymer-Zusammensetzung auf den Einsatz aufgetragen wird.

17. Beschichteter Befestigungseinsatz aus Metall nach einem der Ansprüche 14 bis 16, wobei die Windungen des Einsatzes (14) nach dem Einsetzen in die Gewindebohrung (18) einen Innengewindegang von 60° aufweisen.

## Revendications

1. Procédé pour empêcher une corrosion galvanique dans des ensembles de fixation (10) utilisant un insert de fixation métallique (14), une fixation filetée (12) et un élément de réception (16), ledit procédé comprenant les étapes consistant à :
a) fournir une fixation (12) et un insert de fixation (14) pour maintenir la fixation (12) à l'intérieur dudit élément de réception;
b) revêtir ledit insert de fixation (14) avec une composition de fluoropolymère sans chromate ; et
c) rendre attenant la fixation (12) et l'insert de fixation revêtu (14) à l'intérieur dudit élément de réception (16).

2. Procédé selon la revendication 1, dans lequel ledit insert de fixation (14) est nettoyé avant d'être revêtu.

3. Procédé selon l'une des revendications 1 et 2, dans lequel ledit insert de fixation (14) est abrasé avant d'être revêtu.

4. Procédé selon l'une quelconque des revendications 1 à 3, dans lequel ledit insert de fixation (14) est pré-revêtu avec une couche primaire avant d'appliquer ledit revêtement.

5. Procédé selon l'une des revendications 1 à 4, dans lequel ledit revêtement appliqué audit insert de fixation (14) possède une épaisseur moyenne à sec comprise entre environ 7,6 µm et 12,7 µm.

6. Procédé selon l'une des revendications 1 à 5, dans lequel ledit revêtement est appliqué par une technique de rotation en immersion.

7. Procédé selon l'une des revendications 1 à 6, dans lequel ledit revêtement est appliqué en couches multiples.

8. Procédé selon l'une des revendications 1 à 7, dans lequel ledit revêtement est appliqué par pulvérisation.

9. Procédé selon l'une des revendications 1 à 8, dans lequel ledit revêtement possède une viscosité moyenne au moment de l'application comprise entre environ 30 mPa s à 70 mPa s à 25° C.

10. Procédé selon l'une des revendications 1 à 9, dans lequel ledit revêtement est durci sur ledit insert de fixation (14) par cuisson à une température comprise entre environ 180°C et environ 240°C avant d'être inséré dans ledit élément de réception (16).

11. Ensemble de fixation (10) comprenant :
une fixation filetée (12) formée à partir d'un premier métal ;
un insert de fixation métallique (14); et
un élément de réception (16),
dans lequel au moins l'un des inserts de fixation métallique (14) et l'élément de réception (16) est formé à partir d'un second métal;
**caractérisé en ce que** ledit insert de fixation (14) est revêtu avec une composition de fluoropolymère sans chromate pour réduire l'apparition potentielle d'une corrosion galvanique dans l'ensemble de fixation (10).

12. Ensemble de fixation selon la revendication 11, dans lequel ledit revêtement possède une épaisseur moyenne à sec comprise entre environ 7,6 µm et 12,7 µm.

13. Insert d'ensemble de fixation selon l'une des revendications 11 et 12, dans lequel ledit revêtement possède une viscosité moyenne au moment de l'application comprise entre environ 30 mPa s et 70 mPa s à 25° C.

14. Insert de fixation métallique revêtu (14) d'un ensemble de fixation (10) comprenant une fixation métallique (12) et un élément de réception (16) pour ledit insert de fixation (14), au moins l'un desdits insert (14), fixation (12) et élément de réception (16) étant formé à partir d'un alliage métallique qui est différent du métal de l'autre desdits insert (14), fixation (12) ou élément de réception (16), ledit insert (14) comprenant :
un corps essentiellement cylindrique (28) de fil enroulé de manière hélicoïdale (26) comprenant une pluralité de circonvolutions (30) **caractérisé en ce que** la surface extérieure du corps (28) est revêtue avec une composition de fluoropolymère sans chromate pour empêcher une corrosion galvanique à l'intérieur dudit ensemble de fixation (10).

15. Insert de fixation métallique revêtu selon la revendication 14, dans lequel ledit insert (14) est formé à partir d'acier inoxydable.

16. Insert de fixation métallique revêtu selon l'une des revendications 14 et 15, comprenant en outre une couche primaire appliquée audit insert avant l'application de ladite composition de fluoropolymère.

17. Insert de fixation métallique revêtu selon l'une des revendications 14 à 16, dans lequel les bobines dudit insert (14) fournissent des pas de vis internes à 60° lors de l'insertion à l'intérieur dudit trou taraudé (18).
